# EUROPÄISCHE PATENTSCHRIFT

(11) **EP 0 585 844 B1**
(45) Veröffentlichungstag und Bekanntmachung des Hinweises auf die Patenterteilung: **24.04.1996**
(21) Anmeldenummer: 93113779.8
(22) Anmeldetag: 28.08.1993
(51) Int. Cl.: F16B 2/24, E04B 9/20, F16L 3/11

(54) **Halteklammer zur axial verschiebbaren Befestigung von Stäben**
Retaining clip for the axially adjustable connection of rods
Pince de retenue pour la fixation à déplacement axial de barres

(30) Priorität: 03.09.1992 DE 4229370
(43) Veröffentlichungstag der Anmeldung: 09.03.1994
(73) Patentinhaber: A. Raymond & Cie, F-38028 Grenoble-Cédex (FR)
(72) Erfinder: Raymond, Alain, F-38170 Seyssinet (FR); Moretti, Erminio, F-38000 Grenoble (FR)
(74) Vertreter: Kirchgaesser, Johannes, Dipl.-Ing.

(56) Entgegenhaltungen:
- CH-A- 514 755
- FR-A- 1 302 650
- FR-A- 2 136 538

## Beschreibung

Die Erfindung bezieht sich auf eine Halteklammer zur axial verschiebbaren Befestigung von Stäben gemäß dem Oberbegriff des Anspruchs 1. (FR-A-1 302 650).

Derartige Halteklammern sind in der Praxis bekannt und werden beispielsweise verwendet zum Abhängen von Decken, Kabelkanälen oder sonstigen langgestreckten Bauteilen. Sie bieten den Vorteil, daß sich die Halteklammer beziehungsweise der Haltestab in der Klammer durch Zusammendrücken der Halteschenkel leicht verschieben lassen, was beim horizontalen Ausrichten von Decken oder Kanälen wichtig ist. Dagegen ist die Haltekraft dieser Klammer nicht besonders hoch und daher für schwere Deckenlasten oft nicht geeignet.

Aufgabe der Erfindung ist es daher, die Halteklammer so zu gestalten, daß wesentlich stärkere Lasten gehalten werden können.

Diese Aufgabe wird nach der Erfindung dadurch gelöst, daß an der Halteplatte zwischen den Halteschenkeln ein halbseits offener Gewindeträger befestigt ist, dessen Gewinde im entspannten Zustand der Halteschenkel in das Gewinde des Gewindestabes eingreift.

Die so gestaltete Halteklammer besitzt gegenüber der herkömmlichen Klammer nicht nur, wie angestrebt, eine beträchtlich größere Haltekraft, sondern bietet darüberhinaus auch eine Erleichterung beim genauen Ausrichten der einzelnen Haltepunkte. Nachdem die Haltestangen durch Zusammendrücken der Halteschenkel zunächst grob auf die gewünschte Höhe gebracht worden sind, kann nun die exakte Höhenlage schnell und problemlos durch Drehen des Gewindestabes in der Klammer erreicht werden. Damit läßt sich die Montagezeit zum Abhängen der Decke deutlich reduzieren.

Um die Halteklammer kostengünstig aus einer einzigen Metallplatine herstellen zu können, ist es in weiterer Ausgestaltung der Erfindung zweckmäßig, wenn als Gewindeträger an der Halteplatte zwei schräg abstehende, zur Lochachse hinweisende Gewindelappen angeformt sind, in deren achsparallelen Kanten dem Gewinde des Gewindestabes angepaßte Zacken eingeschnitten sind.

Hierbei läßt sich das vorhandene Platinenmaterial noch besser nutzen, wenn an der Halteplatte zwischen den achsparallelen Gewindekanten mindestens zwei schräg auf den Gewindestab gerichtete Stützlappen vorgesehen sind, welche aus der Halteplatte ausgestanzt und soweit zur Lochachse hin eingedrückt sind, daß diese Stützlappen mit den Gewindezacken gleichzeitig in die Gewinderillen des Gewindestabes eingreifen.

In der Zeichnung sind zwei Ausführungsbeispiele der Erfindung dargestellt, welche nachfolgend näher erläutert werden.

Es zeigt:
Fig. 1 eine erfindungsgemäße Halteklammer in Seitenansicht mit Teilschnitt durch den Haltebereich des Gewindestabes,
Fig. 2 die Halteklammer in Vorderansicht,
Fig. 3 die an einem Träger befestigte Halteklammer mit zusammengedrückten Schenkeln zum Einschieben des Gewindestabes,
Fig. 4 die gleiche Montagesituation mit entspannten Schenkeln zum Halten des Gewindestabes,
Fig. 5 eine andere Ausführungsform der Halteklammer in Seitenansicht,
Fig. 6 die gleiche Halteklammer in Vorderansicht,
Fig. 7 einen Schnitt durch den Haltebereich gemäß Linie VII - VII in Figur 5,
Fig. 8 eine Vergrößerung der Gewindezacken gemäß Figur 6,
Fig. 9 eine Vergrößerung des Haltebereichs gemäß Figur 7 und
Fig. 10 die Halteklammer in montiertem Zustand wie Figur 3.

Die in den Figuren dargestellte Halteklammer besteht im wesentlichen aus einer Halteplatte 1 und zwei von dieser Platte 1 V-förmig auseinanderstrebenden Halteschenkeln 2 aus Federbandstahl. In den Halteschenkeln 2 befinden sich im gleichen Abstand von der Halteplatte 1 zwei zueinander fluchtende Löcher 3 zur Aufnahme und Fixierung eines Gewindestabes 4.

Die Löcher 3 sind in ihrem Durchmesser so bemessen, daß sich der Gewindestab 4 bei zusammengedrückten Halteschenkeln 2 leicht in die Löcher 3 einführen läßt. Sobald der Stab 4 zu der Halteplatte 1 die gewünschte Lage erreicht hat, läßt man die beiden Halteschenkel 2 in ihre Ausgangslage zurückfedern, so daß der Stab 4 durch die sich am Stab 4 anlegenden Randkanten 5 der beiden Löcher 3 zur Halteplatte 1 hin gedrückt wird.

An der Halteplatte 1 ist ein halbseits offener Gewindestein 6 befestigt, dessen Gewinde im entspannten, auseinanderstrebenden Zustand der Halteschenkel 2 in das Gewinde des Gewindestabes 4 eingreift, so daß die Haltekraft zwischen Klammer und Stab um ein Vielfaches erhöht wird.

Die Halteplatte 1 ist auf der vom Gewindestein 6 abgekehrten Seite mit einem Bauteil 7 verbunden, wobei die Verbindung zweckmäßigerweise durch einen vom Gewindestein 6 abstehenden und durch Löcher in der Platte 1 und dem Bauteil 7 hindurchgeführten Zapfen 8 hergestellt wird. Das Bauteil 7 besitzt an seinem oberen Ende zwei federnd auseinanderbiegbare Klemmschenkel 9 und 10 zur Befestigung an einem Träger 11.

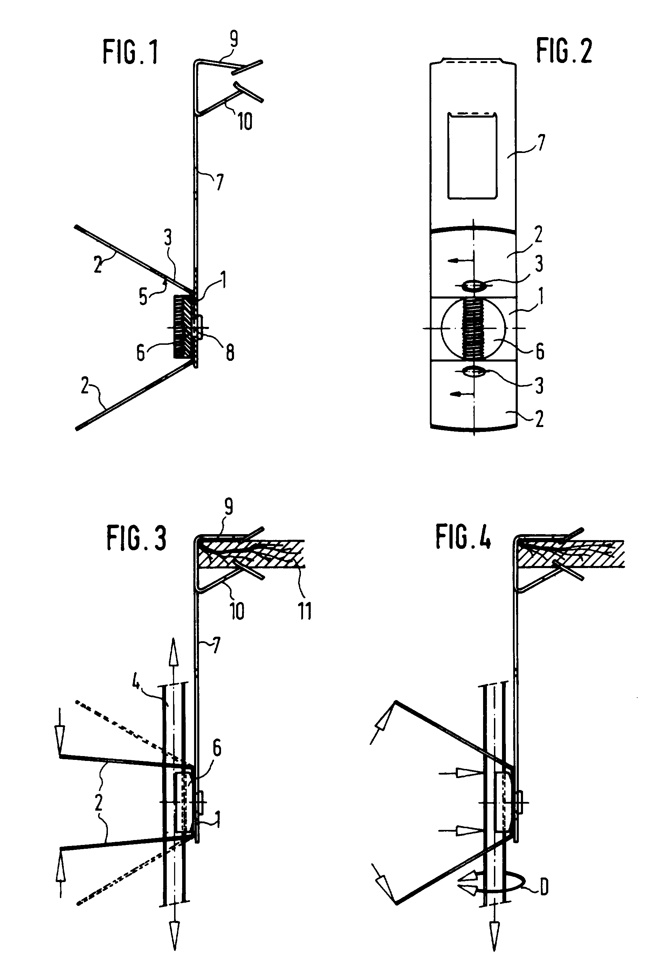

Die Funktion der Halteklammer ist aus den Figuren 3 und 4 ersichtlich. Nach der Befestigung des Bauteils 7 an den Träger 11, welcher beispielsweise aus Deckenbalken oder Profilleisten bestehen kann, werden die beiden Halteschenkel 2 von Hand zusammengedrückt, so daß die Löcher 3 etwas vom Gewindestein 6 wegbewegt werden. Nun ist der Weg frei zum Einführen des Gewindestabes 4 (Figur 3). Nachdem dieser grob auf die gewünschte Lage bzw. Höhe gebracht worden ist, läßt man die Halteschenkel 2 wieder auseinanderfedern. Hierbei wird der Gewindestab 4 in den Gewindestein 4 eingedrückt, so daß die beiden Gewinde ineinandergreifen (Figur 4).

In dieser Lage kann der Gewindestab 4 in Richtung des Pfeiles "D" gedreht werden, so daß nunmehr eine Feineinstellung auf die exakte Höhenlage möglich ist. Dies ist beispielsweise beim Abhängen von Decken erforderlich, um die in der Zeichnung nicht dargestellten Aufhängepunkte für die Decke genau auf die gleiche Höhe einstellen zu können.

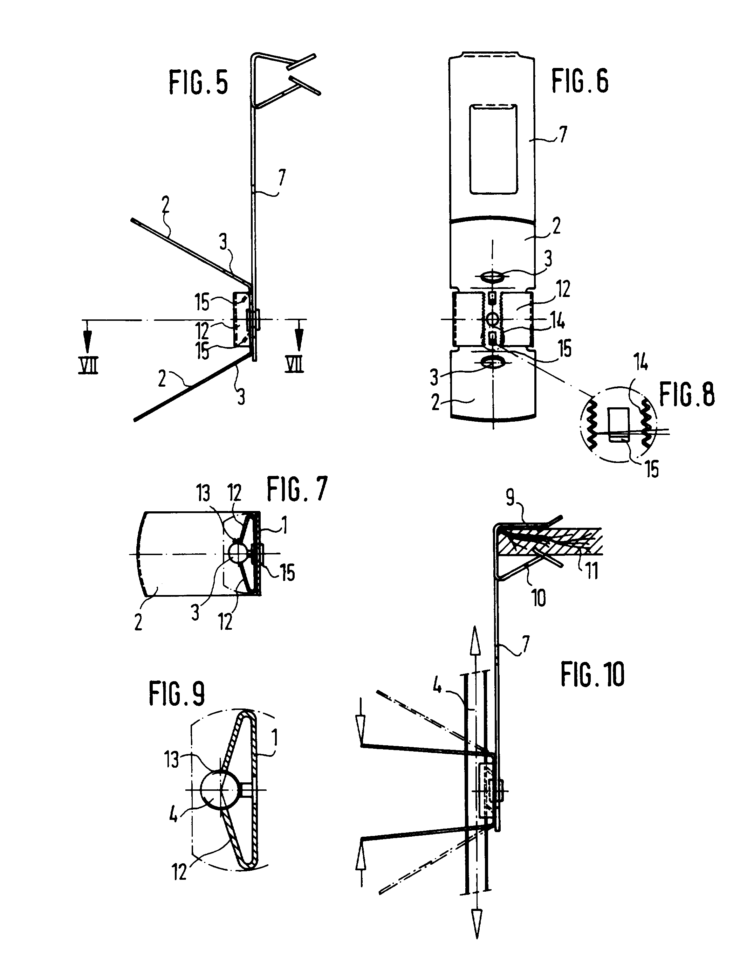

Bei der in den Figuren 5 bis 10 dargestellten Ausführungsform der Halteklammer sind an der Halteplatte 1 anstelle des Gewindesteins 6 zwei schräg abstehende, zum Gewindestab 4 bzw. zur Lochachse weisende Gewindelappen 12 angeformt, welche beim Fertigen der Halteklammer zunächst an der Halteplatte 1 zwischen den beiden Schenkeln 2 in der Platine quer abstehend ausgestanzt und dann zur Halteplatte 1 nach innen soweit umgebogen werden, bis die Plattenebene auf die Achse der Löcher 3 gerichtet ist. Wie aus Figur 6 und im Detail aus Figur 8 ersichtlich, sind in den zum Gewindestab 4 hingebogenen achsparallelen Kanten 13 der Gewindelappen 12 den Gewinderillen des Gewindestabs 4 angepaßte Zacken 14 eingeschnitten, welche in der entspannten, d.h. auseinanderstrebenden Lage der Halteschenkel 2 in das Gewinde des Stabes 4 eingreifen.

Zur weiteren Abstützung des Gewindestabes 4 an der Klammer sind an der Halteplatte 1 zwischen den achsparallelen Gewindekanten 13 mindestens zwei, schräg auf den Gewindestab 4 gerichtete Stützlappen 1,5 vorgesehen. Diese lassen sich auf einfache Weise dadurch erzeugen, daß sie aus der Halteplatte 1 ausgestanzt und dann soweit zur Lochachse gedrückt werden, daß die Stützlappen 15 mit den Gewindezacken 14 gleichzeitig in die Rillen des Gewindestabes 4 eingreifen und sich auf den Gewindeflanken abstützen.

Diese Ausführungsform gestattet eine kostengünstige Herstellung der Halteklammer aus nur einem Blechstreifen, der sogenannten Platine, so daß die Herstellungskosten für die einzelnen Befestigungsstellen gegenüber der Ausführungsform nach Figur 1 - 4 deutlich niedriger liegen, weil bei der erstgenannten Ausführungsform mit dem Gewindestein 6 noch ein zusätzliches Kunststoffteil benötigt wird.

## Patentansprüche

1. Halteklammer zur axial verschiebbaren Befestigung von Stäben, bestehend aus einer mit einem Bauteil verbindbaren Halteplatte und zwei von dieser Platte V-förmig auseinanderstrebenden, federnd zusammendrückbaren Halteschenkeln mit zwei zueinander fluchtenden Löchern zur Aufnahme eines Gewindestabes, welcher in der auseinanderstrebenden Lage der Schenkel durch die sich am Stab anlegenden Randkanten der beiden Löcher gehalten wird,
**dadurch gekennzeichnet,** daß an der Halteplatte (1) zwischen den Halteschenkeln (2) ein halbseits offener Gewindeträger (6, 12) befestigt ist, dessen Gewinde im entspannten Zustand der Halteschenkel (2) in das Gewinde des Gewindestabes (4) eingreift.

2. Halteklammer nach Anspruch 1, dadurch gekennzeichnet, daß als Gewindeträger an der Halteplatte (1) zwei schräg abstehende, zur Lochachse hinweisende Gewindelappen (12) angeformt sind, in deren achsparallelen Kanten (13) dem Gewinde des Gewindestabes (4) angepaßte Zacken (14) eingeschnitten sind.

3. Halteklammer nach Anspruch 2, dadurch gekennzeichnet, daß an der Halteplatte (1) zwischen den achsparallelen Gewindekanten (13) mindestens zwei schräg auf den Gewindestab (4) gerichtete Stützlappen (15) vorgesehen sind, welche aus der Halteplatte (1) ausgestanzt und soweit zur Lochachse hin eingedrückt sind, daß diese Stützlappen (15) mit den Gewindezacken (14) gleichzeitig in die Gewinderillen des Gewindestabes (4) eingreifen.

## Claims

1. A holding clip for axially displaceably fixing rods, comprising a holding plate which can be connected to a component and two holding limbs which diverge in a V-shape from said plate and which can be resiliently pressed together, having two mutually aligned holes for receiving a screwthreaded red which in the divergent position of the limbs is held by the edges of the two holes, which bear against the rod, characterised in that fixed to the holding plate (1) between the holding limbs (2) is a threaded carrier (6, 12) which is open at one side and whose thread engages into the thread of the screwthreaded rod (4) in the released condition of the holding limbs (2).

2. A holding clip according to claim 1 characterised in that two inclinedly projecting threaded lugs (12) which face towards the axis of the hole are formed on the holding plate (1) as the threaded carrier, teeth (14) which are matched to the thread of the threaded rod (4) being cut into the edges (13) of the lugs (12), which are parallel to the axis.

3. A holding clip according to claim 2 characterised in that provided on the holding plate (1) between the threaded edges (13) which are parallel to the axis are at least two support lugs (15) which are directed inclinedly towards the threaded rod (4) and which are stamped out of the holding plate (1) and which are pressed in towards the axis of the hole to such an extent that said support lugs (15) simultaneously engage with the thread teeth (14) into the thread grooves of the threaded rod (4).

## Revendications

1. Agrafe de retenue pour la fixation de baguettes, avec possibilité de déplacement dans le plan axial, se composant d'une plaque support de retenue prévue pour être rendue solidaire d'un élément de construction et de deux pattes de retenue élastiquement compressibles qui, partant de cette plaquette, vont en s'écartant l'une de l'autre en formant un V, comportant deux trous en alignement l'un par rapport à l'autre pour montage d'une tige filetée qui, lorsque les pattes de retenue se trouvent dans leur position écartée, est maintenue par les arêtes des bords des deux trous, se **caractérisant par le fait** qu'un support de filetage ouvert à moitié de part et d'autre de celui-ci (6, 12) est fixé sur la plaque support de retenue (1) entre les pattes de retenue (2), dont le filetage est en prise avec le filetage de la tige filetée (4) lorsque les pattes de retenue sont en position de détente.

2. Agrafe de retenue suivant la revendication 1, se caractérisant par le fait que se support de filetage se présente sous la forme de deux pattes formant filetage (12) s'écartant suivant une disposition oblique, orientées vers l'axe du trou, qui sont réalisées solidaires de la plaque support de retenue (1), pattes au niveau des arêtes parallèles à l'axe (13) desquelles sont réalisées des crans (14) adaptés au filetage de la tige filetée (4).

3. Agrafe de retenue suivant la revendication 2, se caractérisant par le fait qu'il est prévu, sur la plaque support de retenue (1), entre les arêtes parallèle à l'axe formant filetage (13) au moins deux languettes d'appui (15) orientées obliquement en direction de la tige filetée (4), qui sont réalisées par découpage à la presse dans la plaque support de retenue (1) et qui sont rabattues par pression en direction de l'axe du trou dans une proportion telle que ces languettes d'appui (15) viennent s'encastrer en prise dans le fond des filets de la tige filetée (4) en même temps que les crans formant filetage (14).
